# EUROPÄISCHE PATENTANMELDUNG

(11) **EP 2 324 705 A1**
(43) Veröffentlichungstag der Anmeldung: **25.05.2011**
(21) Anmeldenummer: 10190647.7
(22) Anmeldetag: 10.11.2010
(51) Int. Cl.: A01K 1/035

(54) **Trockentoilette für den Haushaltsbereich**

(30) Priorität: 18.11.2009 DE 202009013750 U
(71) Anmelder: MELITTA HAUSHALTSPRODUKTE GmbH & Co. Kommanditgesellschaft, 32427 Minden (DE)
(72) Erfinder: Krause, Thomas, 32427 Minden (DE); Vorfeld, Udo, Dr., 32051 Herford (DE); Cseh, Martin, 91452 Wilhermsdorf (DE); Schabbach, Wolfgang, 66123 Saarbrücken (DE); Tischer, Georg, 96450 Coburg (DE)
(74) Vertreter: Dantz, Jan Henning

(57) **Zusammenfassung**

Eine Trockentoilette (1) für den Haushaltsbereich, insbesondere Trockentoilette für Kleintiere wie z.B. Katzen oder dergleichen, mit einem schalenartigen Behälter (2) mit einem Füllraum (3) zur Aufnahme eines feuchtigkeits-und geruchsbindenden Einstreumittels (4), wobei sich im Bereich einer Seitenwand (6) des Behälters (2) eine Auffangschale (5) an den Behälter (2) anschließt, welcher gegenüber dem Behälter (2) abgewinkelt verläuft und einen Auffangraum (8) bildet, welcher mittels eines abnehmbaren Siebes (7) zum Füllraum (3) des Behälters (2) hin abgegrenzt ist.

## Beschreibung

Die vorliegende Erfindung betrifft eine Trockentoilette für den Haushaltsbereich, insbesondere Trockentoilette für Kleintiere wie z.B. Katzen oder dergleichen, mit einem schalenartigen Behälter mit einem Füllraum zur Aufnahme eines feuchtigkeits- und geruchsbindenden Einstreumittels.

Trockentoiletten der vorerwähnten Art sind an sich bekannt, ebenso Einstreumittel, die geeignet sind, Feuchtigkeit und Geruchsstoffe aufzunehmen und zu binden, insbesondere, um die Geruchsbeeinträchtigung im Bereich der Trockentoilette so gering wie möglich zu halten.

Durch die Bindung von Feuchtigkeit bilden sich im Bereich des Einstreumittels Klumpen, die von Zeit zu Zeit aussortiert werden müssen.

Diese Reinigung des Einstreumittels ist bislang sehr umständlich und zeitraubend.

Aufgabe der vorliegenden Erfindung ist es deshalb, eine Trockentoilette der gattungsgemäßen Art zu schaffen, die eine besonders einfache Handhabung bei der Entfernung von Klumpen aus einem Einstreumittel ermöglicht.

Diese Aufgabe wird erfindungsgemäß dadurch gelöst, dass sich im Bereich einer Seitenwandung des Behälters eine Auffangschale an den Behälter anschließt, welche gegenüber dem Behälter abgewinkelt verläuft und einen Auffangraum bildet, welcher mittels eines abnehmbaren Siebes zum Füllraum des Behälters hin abgegrenzt ist.

Eine derartige Konstruktion einer Trockentoilette ermöglicht es, die im Bereich des Einstreumittels nach einer gewissen Benutzungsdauer gebildeten Klumpen leicht vom nicht verunreinigten Einstreurrmittel zu trennen, dadurch, dass die gesamte Trockentoilette gekippt wird derart, dass die Auffangschale in eine horizontale Lage gebracht wird. Bei diesem Kippen wird das im Behälter befindliche Einstreumittel durch das Sieb, welches den Behälter vom Auffangraum der Auffangschale trennt, gesiebt und die Verklumpungen im Bereich des benutzten Einstreumittels zurückgehalten. Anschließend können die Verklumpungen, die auf dem Sieb zurückgehalten werden, durch Abnahme des Siebes problemlos entsorgt werden.

Anschließend wird die Trockentoilette wieder in ihre Ursprungslage zurückgekippt, wodurch das gereinigte Einstreumittel wieder in den Füllraum des Behälters zurückgeführt wird. Nach Einsetzen des Siebes ― und nach einem teilweise Nachfüllen von Einstreumittel ― ist dann die Trockentoilette wieder zur Benutzung bereit.

Zweckmäßigerweise ist die Trockentoilette so ausgelegt, dass das nutzbare Volumen des Auffangraumes der Auffangschale dem Volumen des Füllraumes des Behälters zumindest annähernd entspricht.

Dadurch wird vermieden, dass bei einem Reinigungsvorgang, der wie oben beschrieben abläuft, Einstreumittel über die Begrenzungen derAuffangschale austreten und somit die Umgebung der Trockentoilette verschmutzen kann.

Nach einer bevorzugten Ausführungsform der Erfindung ist das Sieb in seinem in den Füllraum des Behälters hineinragenden Bereich mit einer zum Füllraum hin offenen Sammelrinne versehen.

Hier können Verklumpungen bequem aufgefangen und ohne die Gefahr des unkontrollierten Herabfallens vom Sieb sicher entsorgt werden.

Für die Handhabung des Siebes bei einem Reinigungsvorgang ist es vorteilhaft, wenn das Sieb an seinem der Sammelrinne abgewandt liegenden Bereich mit einem Handgriff ausgestattet ist.

Weitere Merkmale der Erfindung sind Gegenstand weiterer Unteransprüche.

Ein Ausführungsbeispiel der Erfindung ist in den beigefügten Zeichnungen dargestellt und wird im Folgenden näher beschrieben.

Es zeigen:
- Figur 1: eine perspektivische Darstellung einer erfindungsgemäßen Trockentoilette mit eingefülltem Einstreumittel
- Figur 2: eine perspektivische Darstellung der Trockentoilette in einer gegenüber Figur 1 abgekippten Position
- Figur 3: eine perspektivische Darstellung der Trockentoilette in einer gegenüber Figur 1 um 90° abgekippten Stellung und mit einem von der Trockentoilette im Übrigen abgenommenen Sieb
- Figur 4: eine perspektivische Darstellung der Trockentoilette in einer der Figur 1 entsprechenden Position, dargestellt ohne eingefülltes Einstreumittel
- Figur 5: eine der Figur 4 entsprechende Perspektivdarstellung der Trockentoilette gemäß den Figuren 1 ― 4 mit integrierten Halte- und Führungsmitteln zur Fixierung des lediglich angedeuteten Siebes nach den Figuren 1 ― 4.

In den Zeichnungen ist mit dem Bezugszeichen 1 insgesamt eine Trockentoilette für den Haushaltsbereich bezeichnet, die insbesondere als Trockentoilette für Kleintiere wie z.B. Katzen oder dergleichen vorgesehen ist.

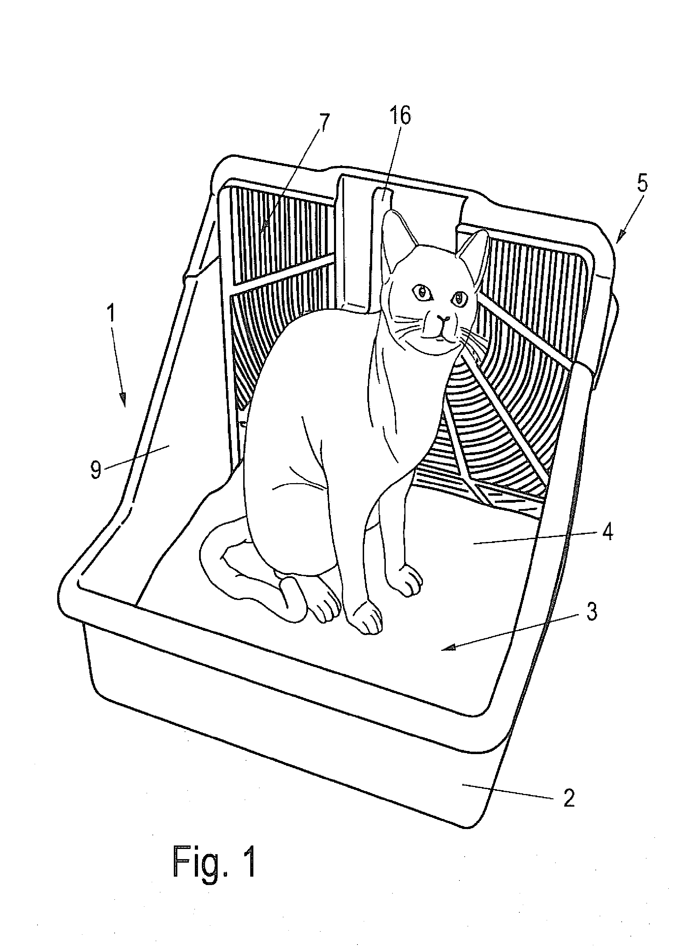

Wie die Figuren 1 ― 4 deutlich zeigen, umfasst die Trockentoilette 1 einen schalenartigen Behälter 2 mit einem Füllraum 3, in den ein an sich bekanntes feuchtigkeits- und geruchsbindendes Einstreumittel einfüllbar ist, und eine Auffangschale 5, die sich im Bereich einer Seitenwandung 6 des Behälters 2 an diesen anschließt und vorzugsweise einstückig mit dem Behälter 2 im Übrigen gefertigt ist. Weiterhin umfasst die Trockentoilette 1 ein Sieb 7, welches einen vom Auffangbehälter 5 gebildeten Auffangraum 8 vom Füllraum 3 des Behälters 2 trennt.

Wie die Figuren deutlich machen, verläuft die Auffangschale 5 winklig zum Behälter 2, vorzugsweise in einem Winkel von 90°.

Der Füllraum 3 des Behälters 2 und der diesem zugewandt liegende Auffangraum 8 der Auffangschale 5 sind durch einander gegenüberliegende sowie schräg von der Auffangschale 5 zum Behälter 2 verlaufende Seitenwandteile 9 begrenzt.

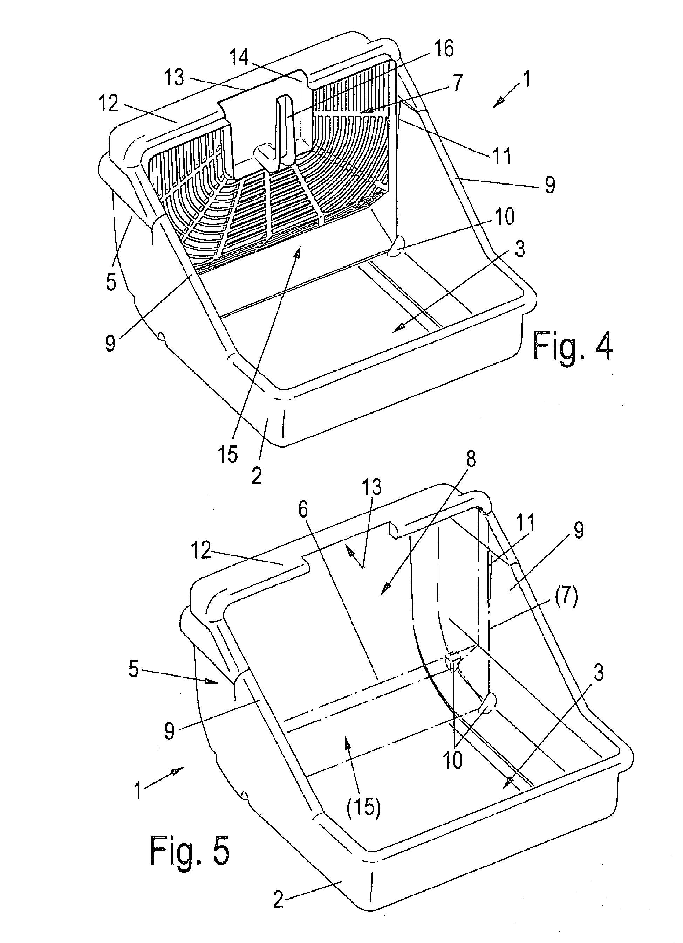

Im Bereich des Behälters 2, der Auffangschale 5 und der Seitenwandungen 9 sind Halteteile 10 bzw. Führungsteile 11 vorgesehen, mittels derer das Sieb 7 sicher in seiner den Auffangraum 8 der Auffangschale 5 abtrennenden Position fixiert werden kann. Außerdem ist im Bereich einer rechtwinklig zu den Seitenwandungen 9 verlaufenden Stirnwand 12 der Auffangschale 5 eine Aussparung 13 vorgesehen, in welche ein entsprechend gestaltetes Klemmstück 14 des Siebes 7 eingeführt werden kann. Durch dieses Klemmstück 14 wird das Sieb 7 zusätzlich in seiner Ausgangsposition gemäß den Figuren 1 und 4 gesichert.

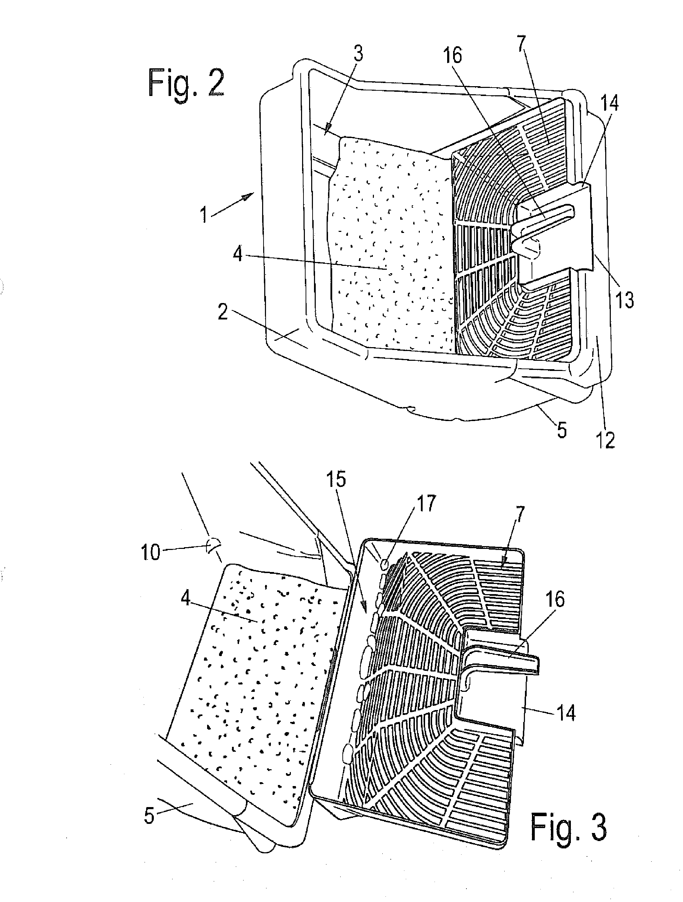

Das Sieb 7 ist in seinem dem Füllraum 3 des Behälters 2 zugewandten Bereich mit einer zum Füllraum 3 hin gesehen offenen Sammelrinne 15 ausgestattet, was insbesondere die Figuren 3 und 4 deutlich zeigen.

Außerdem weist das Sieb 7 an seinem der Sammelrinne 15 abgewandt liegenden oberen Bereich einen Handgriff 16 auf.

Der vorstehend beschriebene Aufbau der Trockentoilette 1 ermöglicht folgende Funktion:
Sofern sich nach einer ein- oder mehrmaligen Benutzung der Trockentoilette 1 Klumpen im eingefüllten Einstreumittel 4 gebildet haben und eine Reinigung der Trockentoilette 1 durchgeführt werden soll, erfolgt dies auf einfache Art und Weise dadurch, dass die Trockentoilette 1 aus ihrer in den Figuren 1 und 4 gezeigten Grund- oder Nutzposition um 90° gekippt wird, bis die Rückseite der Auffangschale 5 bodenseitig aufsteht, was zur Folge hat, dass das Einstreumittel 4 das Sieb 7 durchtritt und in den Auffangraum 8 der Auffangschale 5 überführt wird. Eventuell vorhandene Klumpen 17 gelangen in die Sammelrinne 15, was Figur 3 besonders deutlich zeigt. Nach dem vollständigen Durchsieben des Einstreumittels 4 kann nun das Sieb 7 von der Trockentoilette 1 im Übrigen abgenommen und die Verunreinigungen in Form der Klumpen 17 bequem entsorgt werden.

Anschließend wird die Trockentoilette 1 wieder um 90° zurückgeschwenkt, so dass der Behälter 2 wieder seine ursprüngliche Lage einnimmt. Dabei wird das gereinigte Einstreumittel 4 wieder in den Füllraum 3 des Behälters 2 zurückbefördert. Anschließend wird das Sieb 7 wieder in seine Position gemäß den Figuren 1, 2 und 4 eingesetzt und die Trockentoilette 1 ist wieder betriebsbereit.

Gegebenenfalls kann Einstreumittel 4 nachgefüllt werden, falls dies sinnvoll oder erforderlich ist.

Sowohl der Behälter 2 wie die damit einstückig hergestellte Auffangschale 5 wie auch das Sieb 7 sind vorteilhafterweise jeweils aus Kunststoff hergestellt.

Bevorzugt ist der Auffangraum 8 derart dimensioniert, dass dessen nutzbares Volumen zumindest annähernd dem Volumen des Füllraumes 3 des Behälters 2 entspricht.

Somit kann also bei Reinigungsvorgängen kein Einstreumittel 4 über die Auffangschale 5 hinaustreten, das gleiche gilt beim Zurückführen des gereinigten Einstreumittels 4 in den Füllraum 3 des Behälters 2.

Vorzugsweise weist das Sieb 7 schlitzartige Öffnungen auf, deren Schlitzbreite im Bereich zwischen 5 und 20 mm liegt, vorzugsweise zwischen 7 und 15 mm.

Die Reinigung des Einstreumittels 4 ist durch einfaches Umkippen der Trockentoilette 1 möglich und die Entsorgung von Klumpen 17 erfolgt ebenso einfach durch Abnahme des Siebes 7 und Überführung der Klumpen 17 in einen Abfallbehälter.

Eine Verunreinigung der Umgebung der Trockentoilette bei einem Reinigungsvorgang ist bei sachgemäßer Handhabung praktisch ausgeschlossen und lediglich bei grober Fehlbedienung zu befürchten.

### Bezugszeichenliste

- 1: Trockentoilette
- 2: Behälter
- 3: Füllraum
- 4: Einstreumittel
- 5: Auffangschale
- 6: Seitenwandung
- 7: Sieb
- 8: Auffangraum
- 9: Seitenwandung
- 10: Halteteil
- 11: Führungsteil
- 12: Stirnwand
- 13: Aussparung
- 14: Klemmstück
- 15: Sammelrinne
- 16: Handgriff
- 17: Klumpen

## Patentansprüche

1. Trockentoilette (1) für den Haushaltsbereich, insbesondere Trockentoilette für Kleintiere wie z.B. Katzen oder dergleichen, mit einem schalenartigen Behälter (2) mit einem Füllraum (3) zur Aufnahme eines feuchtigkeits- und geruchsbindenden Einstreumittels (4), **dadurch gekennzeichnet, dass** sich im Bereich einer Seitenwand (6) des Behälters (2) eine Auffangschale (5) an den Behälter (2) anschließt, welcher gegenüber dem Behälter (2) abgewinkelt verläuft und einen Auffangraum (8) bildet, welcher mittels eines abnehmbaren Siebes (7) zum Füllraum (3) des Behälters (2) hin abgegrenzt ist.

2. Trockentoilette nach Anspruch 1, **dadurch gekennzeichnet, dass** das nutzbare Volumen des Auffangraumes (8) der Auffangschale (5) dem Volumen des Füllraumes (3) des Behälters (2) zumindest annähernd entspricht.

3. Trockentoilette nach Anspruch 1 oder 2, **dadurch gekennzeichnet, dass** das Sieb (7) in seinem in den Füllraum (3) des Behälters (2) hineinragenden Bereich mit einer zum Füllraum (3) hin offenen Sammelrinne (15) versehen ist.

4. Trockentoilette nach einem der vorhergehenden Ansprüche, **dadurch gekennzeichnet, dass** das Sieb (7) an seinem der Sammelrinne (15) abgewandt liegenden Bereich mit einem Handgriff (16) ausgestattet ist.

5. Trockentoilette nach einem der vorhergehenden Ansprüche, **dadurch gekennzeichnet, dass** im Behälter (2) und/oder in der Auffangschale (5) Halte-und Führungsmittel (10, 11) zur lagegerechten Positionierung des Siebes (7) vorgesehen sind.

6. Trockentoilette nach einem der vorhergehenden Ansprüche, **dadurch gekennzeichnet, dass** Behälter (2) und Auffangschale (5) einstückig hergestellt sind.

7. Trockentoilette nach Anspruch 6, **dadurch gekennzeichnet, dass** Behälter (2) und Auffangschale (5) aus Kunststoff gefertigt sind.

8. Trockentoilette nach einem der vorhergehenden Ansprüche, **dadurch gekennzeichnet, dass** das Sieb (7) aus Kunststoff hergestellt ist.

9. Trockentoilette nach einem der vorhergehenden Ansprüche, **dadurch gekennzeichnet, dass** das Sieb (7) mit Schlitzen versehen ist, deren Schlitzbreite in einem Bereich zwischen 5 und 20 mm, vorzugsweise jedoch in einem Bereich zwischen 7 und 15 mm liegt.

10. Trockentoilette nach einem der vorhergehenden Ansprüche, **dadurch gekennzeichnet, dass** die Auffangschale (5) um etwa 90° gegenüber dem Behälter (2) abgewinkelt ist.
